# EUROPEAN PATENT SPECIFICATION

(11) **EP 1 908 045 B1**
(45) Date of publication and mention of the grant of the patent: **07.10.2015**
(21) Application number: 06747991.5
(22) Date of filing: 05.07.2006
(51) Int. Cl.: G09F 3/14, B65C 7/00, D06H 1/04

(54) **FASTENIN MEANS AS WELL AS METHOD AND APPARATUS FOR THIS**
BEFESTIGUNGSMITTEL SOWIE VERFAHREN UND VORRICHTUNG DAFÜR
MOYEN DE FIXATION AINSI QUE PROCÉDÉ ET APPAREIL POUR CELUI-CI

(30) Priority: 08.07.2005 SE 0501676
(43) Date of publication of application: 09.04.2008
(73) Proprietor: Asph, Håkan, 433 46 Partille (SE); Eghult, Roger, 184 91 Åkersberga (SE)
(72) Inventor: Asph, Håkan, 433 46 Partille (SE); Eghult, Roger, 184 91 Åkersberga (SE)
(74) Representative: Berglund, Erik Wilhelm
(86) International application number: PCT/SE2006/000841
(87) International publication number: WO 2007/008147

(56) References cited:
- DD-A1- 206 173
- DE-A1- 3 844 598
- DE-U1- 29 608 965
- FR-A1- 2 506 482
- US-A- 4 689 100
- US-A- 5 373 656

## Description

In order to fasten information about price, material, handling advice, instructions as well as warrants et cetera on objects that are to be sold it is known to use short plastic strings that in both ends are provided with means that can be inserted into each other for durable locking. These devices must however be shaped comparatively exact and therefor become comparatively expensive. Furthermore it has turned out to be comparatively difficult to achieve a reliable apparatus for machine fastening and the work therefor often get a too great manual character to be economically appealing. There is thus need for a fastening on the above type that is lower in cost and more suited for automazation. This not least in view of the fact that many details sold in this way in themselves have a very low price that in a negative manner is increased by the known fastening means.

From US 4,689,100 it is known to provide a hole in one end of an information card for plants and to fasten a tie to the hole so that the tie can be tied to a plant for identification and handling advise. The cards are fed onto the cylinder surface of a drum. Below the holes in each card on the drum there is cavity. Pieces of a plastic tape with reinforcing metal strips are via the cavity on the inner side of the cards pushed out through the card hole. As the drum is rotated the tie pieces extending out through the card holes are folded over the other end of respective tie and the tie parts are then welded together close to the end of the card. The extending loose ends of the tie can then be wrapped around a stem or branch.

The above object is in accordance with the invention solved by the fastening means being constituted by a stretch of plastic strip that is threaded through holes in the parts that are to be connected, wereafter the ends of the plastic strip are welded together. In particular the ends may be placed parallel facing each other before the welding so that a more or less drop like shape is obtained for the fastening means in the fixed state.

Through the use of one simple plastic strip without any special shaping in the ends the cost of the fastening means itself can be kept low since no special shaping has to take place and a low cost plastic material can be used unlike the known devices.

In accordance with the invention the fastening means described above can be fastened to one or several objects by the plastic strip being inserted through a hole in the object or objects, the inserted, so to say front, end of the strip is then held fast on the other side of the object or objects. Hereafter the object or objects that are to be connected are moved laterally a short distance. The other end of the strip, that is the end that has not been inserted down through the objects is brought down against the inserted end of the strip or close to this and in this position the ends of the strip or tape are welded to each other so that the objects are held together.

The above described schematic method to apply the fastening means become due to its simplicity reliable and also adaptable to different kinds of objects and required strip lengths.

Further characteristics of advantageous further developments of the inventive concept are apparent from the patents claims as well as from the following description of an embodiment shown in the enclosed drawings.

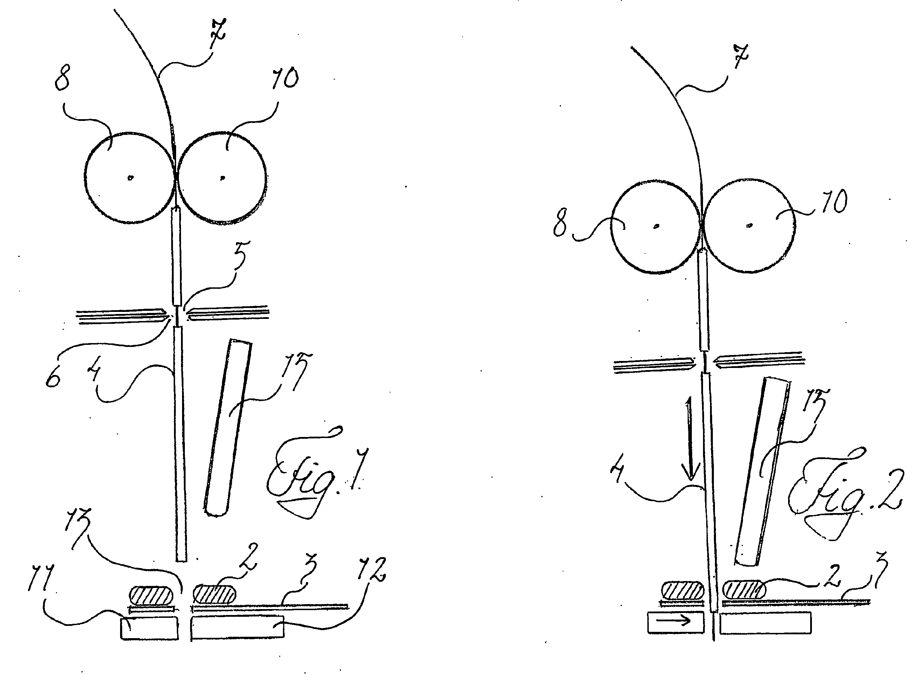

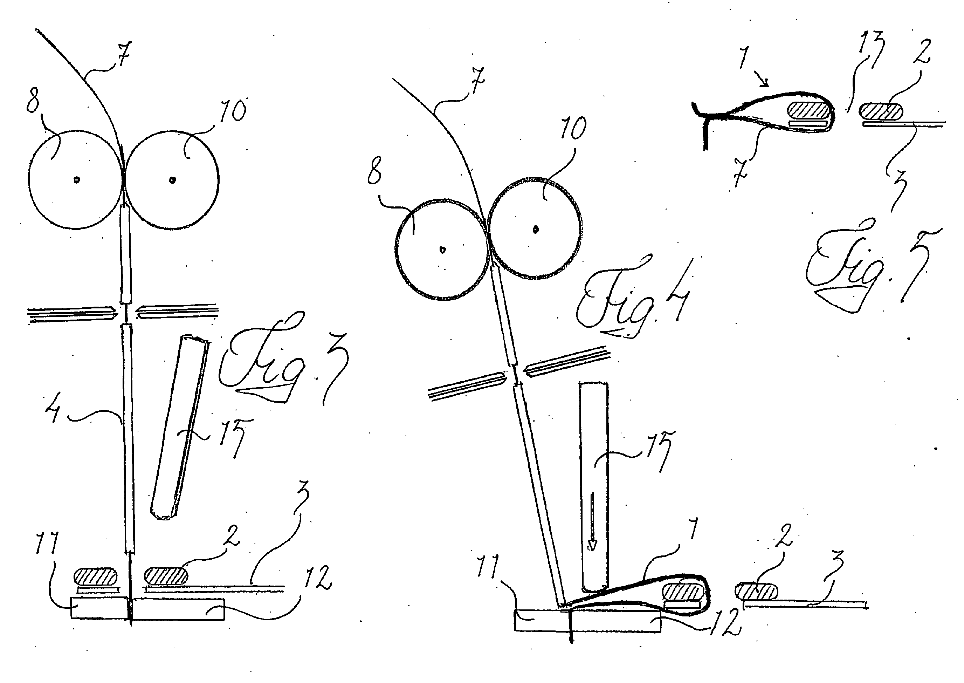

In the drawings figs 1 - 4 depict different steps in an applying of a fastening means in accordance with the invention and fig 5 an applied fastening means.

The fastening means 1 shown in fig 5 comprise only one single plastic strip of weldable material. The plastic strip is inserted through openings in the objects that are to be connected, that is a slice of plastic 2 and a manual 3. The ends of the plastic strip have been put together so that the ends are parallel and directed away from the remaining part of the fastening means and the ends are welded fast to each other.

The fixing station shown schematically in fig 1 to 4 for the applying of the fixing means 1 comprise a flat tube 4 with slightly larger internal dimensions than the plastic strip 7. A distance up on the tube a cutting device in the shape of two panels is arranged with thorough holes 5 and 6 and were one panel by means of an air cylinder can be displaced so that a cutting of a the strip 7 present in the tube can take place. Above the tube drive rollers 8, 10 are arranged for the feeding of the strip 7. The tube together with the means for feeding and cutting are moveable up and down.

The mounting devices also have a device not shown to bring the objects that are to be fastened together past the above described tube with the openings through which the strip is to be inserted centered in relation to the tube.

Next to the tube a welding device 15 is arranged for instance for welding by means of ultrasonic sound or heat. Below the path of the objects that are to be connected a moveable jaw 11 can be pressed against a fixed counterstay 12 for the holding of the lower end of the strip 7. A counter stay for the welding device 15 is integrated in the fixed jaw 12.

At the applying of the strip in accordance with the invention the objects that are to be connected are for instance by means of picking means placed on a conveyor for the transport to the mounting place. For instance the conveyor device may have the shape of rotatable table with several reception places for the objects that are to be fastened together and the holding of these to the table can for instance be achieved by sub-pressures. When the openings in the parts that are to be connected to each other are centrally located in relation to the tube and thereby the length direction of the tape 7 the table is stopped (fig 1), the tube 4 is lowered together with the strip 7 therein down through the openings 13 in the objects that are to be connected (fig 2). The movement downwards is ended when the tube and the tape have been inserted through the objects that are to be connected and strip 7 is fed out between the clamping jaws 11, 12 below the objects 2, 3 that are to be connected, the jaws by means of an air-pressure cylinder gripping the strip fig 3. The tube 4 including its drive device 8, 10 is once again lifted up so that the lower end of the tube is located freely above the objects that are to be connected. The objects that are to be connected are now fed forward a short distance (fig 4) so that the objects that are to be connected completely pass the tube. The strip 7 that at this is drawn out further from the tube now lie like a lieing U the lower leg of which is clamped between the jaws 11, 12 with its bent out end and in the other leg the tape is bent up through the tube. The tube ismoved, swivelled somewhat laterally against the direction of movement for the objects that are to be connected together and the tube is lowered so that it press the upper part of the U-shaped strip against the lower part so that the strip is now held fast. In this position the welding device 15 is lowered down (fig 4) by means of a small air pressure cylinder so that the welding device get in contact with a strip 7 and press the parts of this against the counter stay placed below. Heat is added so that the strip is welded together and thereafter the welding device and tube respectively are mowed upwards and returned to the starting position.

The tube with its feeding and welding device is mounted on a common wall or plate that is pivotable in parallel with the direction of movement (in the mounting position) for the objects that are to be connected to move welding device and tube between the work positions. By the pivoting of the plate for welding the welding device 15 can be located very close to the holding jaws.

The required strip has been cut off shortly after the clamping of the forward end of the tape between the jaws. The friction between tube and tape retains the rear end in the tube until the welding is finished and the tube lifted up. The jaws hold the strip when the tube with accompanying driving and cutting means are lifted sufficiently to allow the strip to become free from the tube.

The forward feeding of the table can be by means of two air pressure cylinders, one for the feeding of the set of parts that are to be connected and a second one for the smaller feeding between the insertion of the strip through the openings in the objects and the welding position.

After the connecting of the objects with the fastening means in accordance with the invention these are removed from the table by means of suitable picking means.

In the shown case the cutting of the strip takes place when the front end of the strip has been gripped by the clamping means below the objects that are to be connected. The cutting may however take place in an arbitrary position during the lifting movement of the tube and it is also possible to conceive the tube being lifted extra high before cutting takes place if a longer strip is required. One can also consider that the objects that are to be connected are moved a short distance before cutting takes place if the strip needs to be longer.

## Claims

1. Connection method, **characterized in that** a strip (7) is inserted with a tube into receiving openings (13) in objects (2, 3) that are to be connected, where the strip (7) is held fast in the inserted end, the tube is lifted up, thereafter the objects (2, 3) that are to be connected are displaced so that they completely pass the tube, the strip receives more or less a U-shape, whereafter the upper part of U-shaped strip is pressed against the lower part so that the strip is now held fast, and in this position the ends of the strip are joined.

2. Method according to claim 1, **characterized in that** the strip is cut to a strip with indented length when the strip has been inserted through the objects that are to be held together with its first end and that this end is held fast on the other side of the objects that are to be connected.

3. Apparatus for the execution of the connection method in accordance with claim 1, **characterized in that** it includes a tube 4 moveable to be inserted into and retracted out of through openings in objects that are to be connected, clamping means (11, 12) that can grip a strip (7) pushed through the tube and running in the tube, means to move the objects that are to be connected and that the device further comprise welding means (15) for the pressing together and welding of the ends of the strip to each other, and a cutting device (5, 6) is arranged in the tube (4) for the cutting of the strip.

4. Apparatus according to claim 3, **characterized in that** the tube and welding means are arranged moveable together in the movement direction of the objects so that the weld may be applied close to the clamping means.

## Patentansprüche

1. Verbindungsverfahren, **dadurch gekennzeichnet, dass** ein streifenförmiges Band (7) mit einem Rohr in Aufnahmeöffnungen (13) in zu verbindenden Gegenständen (2, 3) eingeführt wird, wobei das streifenförmige Band (7) am eingeführten Ende festgehalten wird, und das Rohr angeordnet wird, nachdem die zu verbindenden Gegenstände (2, 3) derart verschoben sind, dass sie vollständig durch das Rohr gehen, das streifenförmige Band mehr oder weniger eine U-förmige Gestalt annimmt, anschließend das obere Teil des U-förmigen, streifenförmigen Bandes gegen den unteren Teil derart gedrückt wird, dass das streifenförmige Band festgehalten wird, und wobei in dieser Position die Enden des streifenförmigen Bandes verbunden werden.

2. Verfahren nach Anspruch 1, dass das streifenförmige Band in einer vorbestimmten Länge zugeschnitten wird, wenn das streifenförmige Band durch die Gegenstände durchgeführt ist, welche am ersten Ende gehalten werden, und dass dieses Ende auf der anderen Seite der zu verbindenden Gegenstände festgehalten wird.

3. Vorrichtung zur Durchführung des Verbindungsverfahrens nach Anspruch 1, **dadurch gekennzeichnet, dass** sie ein Rohr (4) umfasst, welches beweglich in Durchgangsöffnungen in zu verbindenden Gegenständen einführbar und von diesen nach außen ziehbar ist, ferner eine Klemmeinrichtung (11, 12) umfasst, welche ein streifenförmiges Band ergreift, welches durch das Rohr und im Rohr läuft, ferner eine Einrichtung zum Bewegen der zu verbindenden Gegenstände und dass die Vorrichtung ferner eine Schweißeinrichtung zum Zusammendrücken und Verschweißen der Enden des streifenförmigen Bandes miteinander und eine Schneideinrichtung (5, 6) aufweist, die in dem Rohr (4) zum Durchtrennen des streifenförmigen Bandes angeordnet ist.

4. Vorrichtung nach Anspruch 3, **dadurch gekennzeichnet, dass** das Rohr und die Schweißeinrichtung zusammen in Bewegungsrichtung der Gegenstände derart bewegbar angeordnet sind, dass die Schweißung in der Nähe der Klemmeinrichtung erfolgt.

## Revendications

1. Procédé de raccordement, **caractérisé en ce qu'**une bande (7) est insérée avec un tube dans des ouvertures de réception (13) dans des objets (2, 3) qui doivent être raccordés, dans lequel la bande (7) est maintenue fermement dans l'extrémité insérée, le tube est levé, après quoi les objets (2, 3) qui doivent être raccordés sont déplacés de sorte qu'ils complètement le tube, la bande reçoit plus ou moins une forme de U, après quoi la partie supérieure de la bande en forme de U est comprimée contre la partie inférieure de sorte que la bande est maintenue fermement et dans cette position, les extrémités de la bande sont assemblées.

2. Procédé selon la revendication 1, **caractérisé en ce que** la bande est coupée en une bande avec une longueur dentelée lorsque la bande a été insérée à travers les objets qui doivent être maintenus ensemble avec sa première extrémité et **en ce que** cette extrémité est fermement maintenue sur l'autre côté des objets qui doivent être raccordés.

3. Appareil pour réaliser le procédé de raccordement selon la revendication 1, **caractérisé en ce qu'**il comprend un tube (4) mobile destiné à être inséré dans et rétracté hors des ouvertures débouchantes dans des objets qui doivent être raccordés, des moyens de serrage (11, 12) qui peuvent saisir la bande (7) poussée à travers le tube et s'étendant dans le tube, des moyens pour déplacer les objets qui doivent être raccordés et **en ce que** le dispositif comprend en outre des moyens de soudage (15) pour comprimer et souder les extrémités de la bande entre elles, et un dispositif de coupe (5, 6) est agencé dans le tube (4) pour la découpe de la bande.

4. Appareil selon la revendication 3, **caractérisé en ce que** le tube et les moyens de soudage sont agencés de manière mobile ensemble dans la direction de déplacement des objets de sorte que la soudure peut être appliquée à proximité des moyens de serrage.
